# EUROPÄISCHE PATENTSCHRIFT

(11) **EP 1 227 055 B1**
(45) Veröffentlichungstag und Bekanntmachung des Hinweises auf die Patenterteilung: **19.04.2006**
(21) Anmeldenummer: 02001805.7
(22) Anmeldetag: 25.01.2002
(51) Int. Cl.: B66C 23/40, B60K 17/356, B66C 23/693

(54) **Kranfahrzeug**
Mobile crane
Grue mobile

(30) Priorität: 29.01.2001 DE 10103780
(43) Veröffentlichungstag der Anmeldung: 31.07.2002
(73) Patentinhaber: F.lli Locatelli S.p.A., 24030 Mapello (BG) (IT)
(72) Erfinder: Locatelli, Carlo, Dott.Ing., 23900 Lecco (IT); De Capitani, Marco, Dott.Ing., 23807 Merate Lc (IT); Haid, Robert, Dipl.-Ing., 89257 Illertissen (DE); Köhler, Joachim, Dipl.-Ing., 89614 Öpfingen (DE)
(74) Vertreter: König, Beate

(56) Entgegenhaltungen:
- EP-A- 0 387 399
- DE-A- 4 402 317
- FR-A- 2 774 670
- US-A- 4 667 763
- US-A- 5 731 987
- US-A- 6 138 845
- SCHULER M: "DER TELEHANDLER - DIE MULTIFUNKTIONELLE ARBEITSMASCHINE FUER LAND-BAU-LAGERWIRTSCHAFT" OLHYDRAULIK UND PNEUMATIK, KRAUSSKOPF VERLAG FUR WIRTSCHAFT GMBH. MAINZ, DE, Bd. 45, Nr. 5, März 2001 (2001-03), Seiten 347-350, XP001058672 ISSN: 0341-2660

## Beschreibung

Die Erfindung betrifft ein Kranfahrzeug mit einem Teleskopausleger und einem hydrostatischen Fahrantriebssystem für mindestens zwei angetriebene Achsen, wobei das hydrostatische Fahrantriebssystem umfaßt: ein Antriebsaggregat, eine vom Antriebsaggregat angetriebene Hydraulikpumpeneinheit, einen von der Hydraulikpumpeneinheit angetriebenen erster Hydraulikmotor, der mit der Vorderachse des Kranfahrzeugs antriebsmäßig verbunden ist, ein zwischen Vorderachse und ersten Hydraulikmotor geschaltetes erstes Schaltgetriebe, eine Steuerung zum Steuern des Betriebes des Fahrantriebssystems.

Inbesondere betrifft die Erfindung ein vergleichsweise kompaktes und mobiles Kranfahrzeug, wie es in Fachkreisen auch unter der Bezeichnung "City Crane" bekannt ist. Solche kompakten Kranfahrzeuge sind mit diversen Anbaugeräten und Ausrüstungen vielseitig einsetzbar, beispielsweise auch als Arbeitsbühne oder als Teleskopstapler. Eine Voraussetzung für einen vielseitigen und effektiven Einsatz eines solchen City Crane ist hohe Mobilität und kompakte Bauweise.

Aus M. Schuler, "Der Telehandler - Die multifunktionelle Arbeitsmaschine für Land-Bau-Lagerwirtschaft", Ölhydraulik und Pneumatik, Band 45, Nr. 5, Seiten 347 bis 350, 2001, ist ein Teleskoplader mit hydrostatischem Fahrantrieb gemäß dem Oberbegriff des Anspruchs 1 bekannt. Dem hydrostatischen Antrieb ist ein mechanisches Schaltgetriebe nachgeschaltet. Der Antrieb erfolgt über Verteilergetriebe und Gelenkwellen, d.h. die Vorder- und.die Hinterachse werden separat angetrieben.

Der vorliegenden Erfindung liegt-die Aufgabe zugrunde, ein kompaktes und wendiges Kranfahrzeug zu schaffen.

Diese Aufgabe ist bei einem Kranfahrzeug mit den Merkmalen des Anspruchs 1 gelöst. Vorteilhafte Weiterbildungen des erfindungsgemäßen Kranfahrzeugs sind Gegenstand der abhängigen Ansprüche.

Bei einem erfindungsgemäßen Kranfahrzeug mit einem Teleskopausleger und einem hydrostatischen Fahrantriebssystem für mindestens zwei angetriebene Achsen umfaßt somit das hydrostatische Fahrantriebssystem:
- ein Antriebsaggregat,
- eine vom Antriebsaggregat angetriebene Hydraulikpumpeneinheit,
- einen von der Hydraulikpumpeneinheit angetriebenen ersten Hydraulikmotor, der mit der Vorderachse des Kranfahrzeugs antriebsmäßig verbunden ist,
- einen von der Hydraulikpumpeneinheit angetriebenen zweiten Hydraulikmotor, der mit der Hinterachse des Fahrzeugs antriebsmäßig verbunden ist,
- ein zwischen Vorderachse und ersten Hydraulikmotor geschaltetes erstes Schaltgetriebe,
- ein zwischen Hinterachse und zweiten Hydraulikmotor geschaltetes zweites Schaltgetriebe, und
- eine Steuerung zum Steuern des Betriebes des Fahrantriebssystems.

Das erfindungsgemäße Kranfahrzeug weist somit ein Antriebssystem auf, welches in erster Linie durch die Kombination einer jeder angetriebenen Achse mit einem zugeordneten Schaltgetriebe und einem zugeordneten Hydraulikmotor gekennzeichnet ist, wobei beide Schaltgetriebe-/Hydraulikmotor-Kombinationen von einer gemeinsamen Hydraulikpumpeneinheit versorgt werden, die von einem Antriebsaggregat, das insbesondere ein Dieselmotor sein kann, angetrieben wird. Diese Anordnung ermöglicht es, mit hoher Geschwindigkeit zu fahren und mit anderen Übersetzungen hohe Krafte (Zugkräfte) einzusetzen.

Das Antriebssystem gemäß der Erfindung hat zum einen aufgrund des Entfallens von Gelenkwellen und Verteilergetriebe den Vorteil, daß Bauraum frei wird und eine freie Wahl des Einbauorts des Antriebsmotors besteht, wodurch eine besonders kompakte Bauweise des Kranfahrzeugs ermöglicht wird. Auch weist das erfindungsgemäße Fahrantriebssystems einen geringeren Platzbedarf auf als im Falle des bekannten Standes der Technik, bei dem der Einbau von Wandlergetrieben vorgesehen ist. Nachdem zudem allen Antriebsachsen ein Schaltgetriebe zugeordnet ist, wird die Mobilität des erfindungsgemäßen Kranfahrzeugs erhöht, da durch diese Maßnahme letztlich eine höhere Fahrgeschwindigkeit des Kranfahrzeugs erzielbar ist.

Vorzugsweise ist das erste und das zweite Schaltgetriebe jeweils ein Lastschaltgetriebe, also ein Getriebe, welches unter Last geschaltet werden kann, und weiterhin ist das erste und das zweite Schaltgetriebe im einfachsten Fal.l jeweils ein Zweiganggetriebe, wobei grundsätzlich selbstverständlich auch Getriebe mit mehr Schaltstufen einsetzbar sind.

In vorteilhafter Weiterbildung der Erfindung ist jeder Antriebsachse eine Mitten-Differentialsperre zugeordnet, wodurch das gesamte Antriebsmoment des einer Antriebsachse zugeordneten Hydraulikmotors einem Rad zugeteilt werden kann, wenn das andere Rad keine Traktion aufweist. Hiermit ist der Nachteil der Einzelradantriebe erheblich verbessert. Zudem ist gegenüber den Gelenkwellenantrieben das maximale Antriebsmoment auf das Moment des jeweiligen Hydraulikmotors begrenzt. Damit sind keine Drehmoment-Überlastungen und Stöße durch andere angekoppelte Achsen möglich.

Gemäß einem weiteren vorteilhaften Merkmal der Erfindung ist vorgesehen, daß jedem angetriebenen Rad eine Quer-Differentialsperre zugeordnet ist. Durch Einlegen einer solchen Quer-Differentialsperre kann das Durchdrehen eines Rades verhindert werden.

Weiterhin ist zweckmäßigerweise vorgesehen, daß die Ventilsteuerung eines jeden Schaltgetriebes so ausgebildet ist, daß bei Ausfall der Stromversorgung der Durchtrieb des zugeordneten Hydraulikmotors zur jeweiligen Antriebsachse getrennt wird. Auf diese Weise wird der Motor gegen Überdrehzahl geschützt. Bei Notbetrieb werden die Ventile per Hand betätigt, um den entsprechenden Gang zu schalten.

Es ist darauf hinzuweisen, daß mit dem erfindungsgemäßen Fahrantriebssystem auch mehrachsige Fahrzeuge mit den gleichen Komponenten aufgebaut werden können, es muß lediglich die Leistung des Motors und der Hydraulikpumpen entsprechend angepaßt werden.

Weitere vorteilhafte Merkmale der Erfindung ergeben sich aus den übrigen Unteransprüchen sowie aus der nachfolgenden Beschreibung, in der ein bevorzugtes Ausführungsbeispiel der Erfindung anhand der Zeichnung näher erläutert wird. In der Zeichnung zeigen, teilweise in halbschematischer bzw. schematischer Darstellung,
- Fig. 1: eine Seitenansicht des erfindungsgemäßen Kranfahrzeugs,
- Fig. 2: eine Ansicht des Kranfahrzeugs gemäß Fig. 1 von vorne,
- Fig. 3: eine Ansicht des Fahrzeugs gemäß Fig. 1 von oben mit ausgefahrenen Stützbeinen,
- Fig. 4: das Fahrantriebssystem des Kranfahrzeugs gemäß Fig. 1 einschließlich eines Schemas der Gesamtsteuerung, und
- Fig. 5: das Fahrantriebssystem bei einer alternativen Ausführungsform des Kranfahrzeugs mit zwei Hinterachsen.

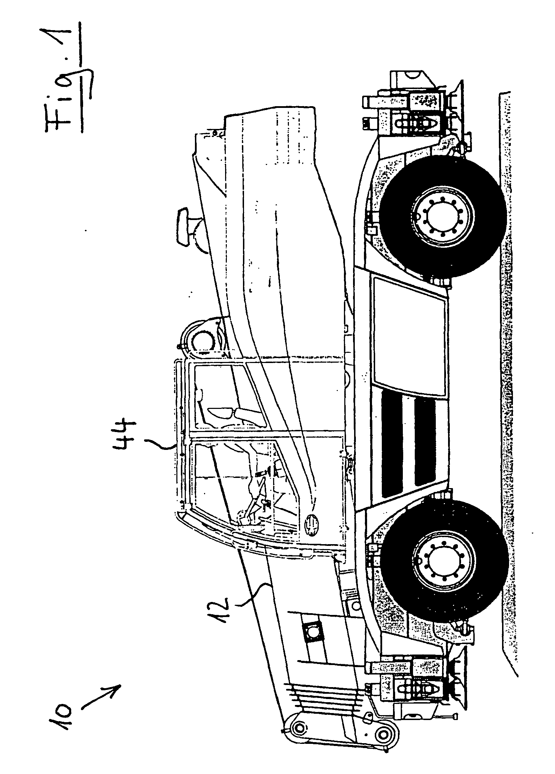

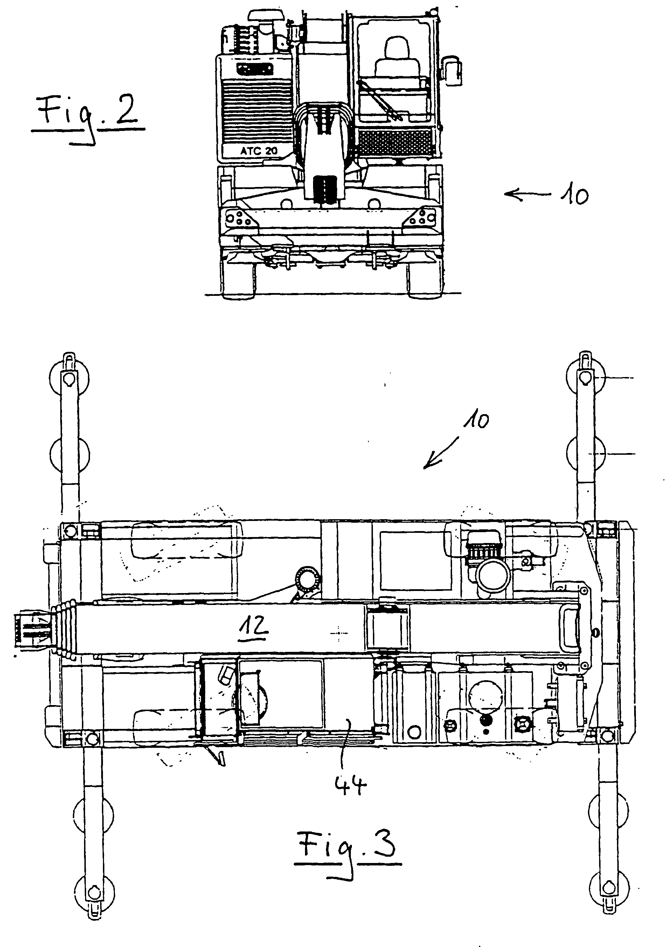

Das in den Figuren 1 bis 3 insgesamt mit der Bezugsziffer 10 bezeichnete Kranfahrzeug ist von seinem grundsätzlichen Aufbau her im wesentlichen bekannt und bedarf daher keiner detaillierten Beschreibung. Im Falle des dargestellten Ausführungsbeispiels handelt es sich um einen 20 Tonnen-Teleskopkran, der vielseitig einsetzbar ist und diverse Anbaugeräte und Ausrüstungszustände umfaßt. Er weist unter anderem einen Teleskopausleger 12 auf.

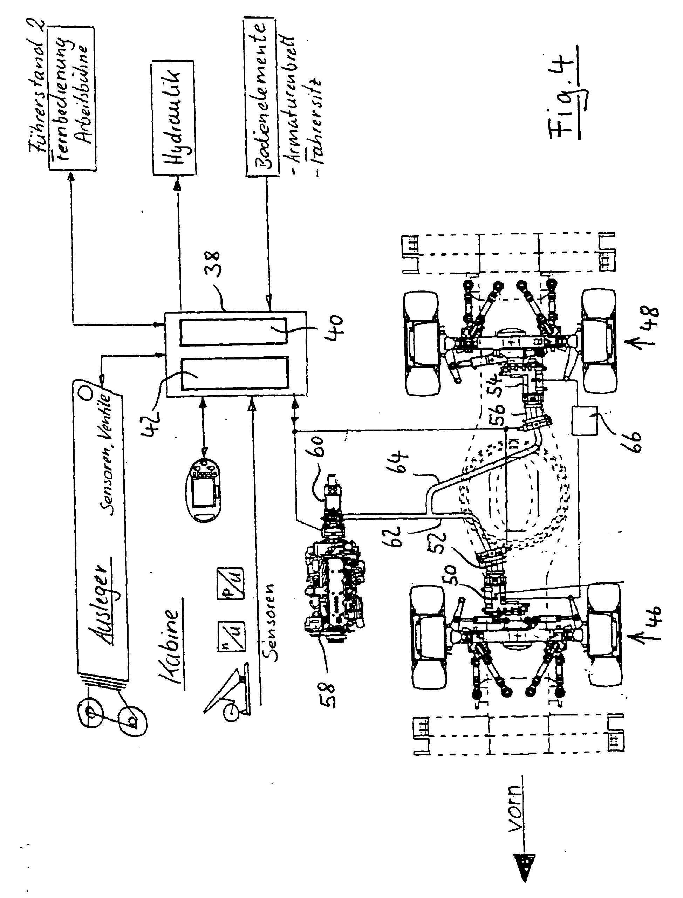

Es wird nunmehr auf Fig. 4 Bezug genommen, in der das erfindungsgemäße Fahrantriebssystems sowie die Gesamtsteuerung dargestellt sind. Im Falle dieses Ausführungsbeispiels umfaßt das Kranfahrzeug eine Vorderachse 46, die als Lenktriebachse mit Lenkzylinder ausgebildet ist, und eine Hinterachse 48, die als Lenktriebachse mit mechanischer Lenkungsverriegelung im Lenkzylinder ausgebildet ist. An die Vorderachse 46 ist ein Schaltgetriebe 50 und ein Hydraulikmotor 52 angeflanscht. Ebenso ist an die Hinterachse ein Schaltgetriebe 54 und ein Hydraulikmotor 56 angeflanscht. Ein Dieselaggregat 58 treibt eine Hydraulikpumpeneinheit 60 an, die ihrerseits über Leitungen 62, 64 die beiden Antriebe der Vorderachse 46 und der Hinterachse 48 hydraulisch versorgt. Mit der Bezugsziffer 66 ist der Ventilblock für die Getriebeschaltung bezeichnet.

Eine zentrale Steuerung 38 umfaßt eine Ausleger-Teleskopiersteuerung 40, die die Position und die Reihenfolge des Aus- bzw. Einfahrens der Teleskopteile steuert und überwacht, sowie eine Fahrantriebssteuerung 42. Die Fahrantriebssteuerung 42 steuert direkt die Pumpen und Motore des Fahrantriebssystems in Abhängigkeit von der Gaspedalstellung und der momenanten Geschwindigkeit. Der Fahrer wählt am Gangwahlschalter die Fahrtrichtung und den Gang vor. Über das Fahrpedal wird die gewünschte Fahrgeschwindigkeit vorgegeben. Die Fahrantriebssteuerung 42 regelt dementsprechend die Pumpen und Motore. Zur Erzielung einer höheren Geschwindigkeit wählt der Fahrer den nächsthöheren Gang. Zur Erzielung einer höheren Zugkraft wählt der Fahrer den nächstkleineren Gang. Den Umschaltvorgang der Getriebe steuert und überwacht wiederum die Fahrantriebssteuerung 42.

Das erfindungsgemäße Fahrantriebssystem weist somit insbesondere folgende Vorteile auf:
- keine Gelenkwellen zwischen den Achsen
- Realisierung von verschiedenen Achsabständen mit den gleichen Komponenten
- geringerer Platzbedarf als beim Einbau von Wandlergetrieben
- freie Wahl des Einbauorts des Antriebsmotors
- freie Wahl der Antriebsmomentverteilung bei mehreren Antriebsachsen
- Fahrstabilitätsregelung auch ohne Bremseingriff möglich
- Zugkraft des Motors kann einem Rad zugeteilt werden
- stoßartige Antriebsmomentbelastungen werden vermieden.

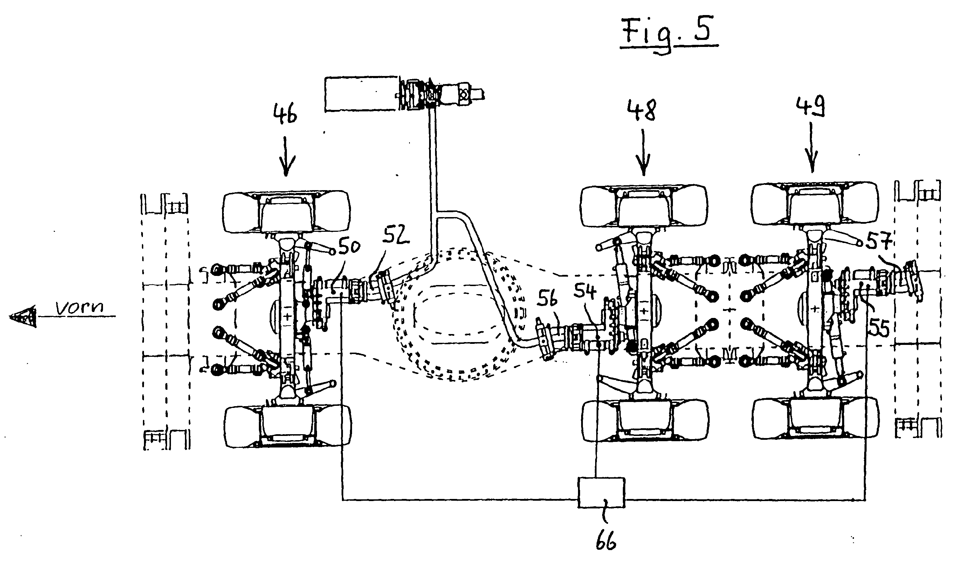

Fig. 5 zeigt ein Fahrantriebssystem entsprechend Fig. 4 mit dem Unterschied, daß im Falle des Ausführungsbeispiels gemäß Fig. 5 zwei Hinterachsen 48, 49 vorgesehen sind, wobei auch die zweite Hinterachse 49 eine Lenktriebachse mit mechanischer Lenkungsverriegelung im Lenkzylinder ist und mittels eines angeflanschten Hydraulikmotors 57 samt zwischengeschaltetem Schaltgetriebe 55 antreibbar ist.

Alle Bewegungen des Kranfahrzeugs werden von der modular aufgebauten Steuerung 38 übernommen. Die einzelnen Steuergeräte sind über Daten-BUS miteinander verbunden. Auf einem zentralen Bildschirm in der Fahrerkabine 44 werden alle Betriebsdaten, Serviceinformationen und Störmeldungen angezeigt. Die Funktion der elektrischen Schalter und Sensoren wird ebenfalls angezeigt und überwacht.

Für die Abgleicharbeiten bei der Inbetriebnahme des Krans sind im Falle der Erfindung keine weiteren Bedien- oder Servicegeräte notwendig, wie z.B. ein Laptop. Alle notwendigen Einstell- und Abgleicharbeiten werden benutzergeführt durch die Bedienelemente am Bildschirm eingestellt. Die Fahrzeugdaten werden nach der Inbetriebnahme für die Dokumentation und den Verwaltungsrechner überspielt.

## Patentansprüche

1. Kranfahrzeug mit einem Teleskopausleger (12) und einem hydrostatischen Fahrantriebssystem für mindestens zwei angetriebene Achsen (46, 48, 49), bei dem das hydrostatische Fahrantriebssystem umfaßt:
ein Antriebsaggregat (58),
eine vom Antriebsaggregat angetriebene Hydraulikpumpeneinheit (60),
einen von der Hydraulikpumpeneinheit (60) angetriebenen erster Hydraulikmotor (52), der mit der Vorderachse (46) des Kranfahrzeugs (10) antriebsmäßig verbunden ist,
ein zwischen Vorderachse (46) und ersten Hydraulikmotor (52) geschaltetes erstes Schaltgetriebe (50),
eine Steuerung (42) zum Steuern des Betriebes des Fahrantriebssystems,
**dadurch gekennzeichnet, daß**
ein von der Hydraulikpumpeneinheit angetriebener zweiter Hydraulikmotor (56) vorgesehen ist, der mit der Hinterachse (48) des Kranfahrzeugs (10) antriebsmäßig verbunden ist, und
zwischen Hinterachse (48) und zweitem Hydraulikmotor (56) ein zweites Schaltgetriebe (54) geschaltet ist.

2. Kranfahrzeug nach Anspruch 1, **dadurch gekennzeichnet, daß** das Antriebsaggregat (58) ein Dieselmotor ist.

3. Kranfahrzeug nach Anspruch 1 oder 2, **dadurch gekennzeichnet , daß** das erste (50) und das zweite Schaltgetriebe (54) jeweils ein Lastschaltgetriebe ist.

4. Kranfahrzeug nach einem der vorhergehenden Ansprüche, **dadurch gekennzeichnet, daß** das erste (50) und das zweite Schaltgetriebe (54) jeweils ein Zweiganggetriebe ist.

5. Kranfahrzeug nach einem der vorhergehenden Ansprüche, **dadurch gekennzeichnet , daß** jeder der Hydraulikmotoren (52, 56) an das jeweilige Schaltgetriebe (50, 54) und jedes der Schaltgetriebe an die jeweilige Antriebsachse (46, 48) angeflanscht sind.

6. Kranfahrzeug nach einem der vorhergehenden Ansprüche, **dadurch gekennzeichnet, daß** jeder Antriebsachse (46, 48) eine Mitten-Differentialsperre zugeordnet ist.

7. Kranfahrzeug nach einem der vorhergehenden Ansprüche, **dadurch gekennzeichnet, daß** jedem antriebenen Rad eine Quer-Differentialsperre zugeordnet ist.

8. Kranfahrzeug nach einem der vorhergehenden Ansprüche, **dadurch gekennzeichnet, daß** die Ventilsteuerung eines jeden Schaltgetriebes (50, 54) so ausgebildet ist, daß bei Ausfall der Stromversorgung der Durchtrieb des zugeordneten Hydraulikmotors (52, 56) zur jeweiligen Antriebsachse getrennt wird.

9. Kranfahrzeug nach einem der vorhergehenden Ansprüche, **dadurch gekennzeichnet, daß** die Steuerung (42) das Fahrantriebssystem in Abhängigkeit von der Gaspedalstellung und der momentanen Fahrgeschwindigkeit steuert.

## Claims

1. Crane vehicle having a telescopic jib (12) and a hydrostatic travelling drive system for at least two driven axles (46, 48, 49), wherein the hydrostatic travelling drive system includes:
a drive unit (58),
a hydraulic pump unit (60) driven by the drive unit,
a first hydraulic motor (52) which is driven by the hydraulic pump unit (60) and which is drivingly connected to the front axle (46) of the crane vehicle (10),
a first transmission mechanism (50) connected between the front axle (46) and the first hydraulic motor (52),
a control means (42) for controlling the operation of the travelling drive system,
**characterised in that**
a second hydraulic motor (56) which is driven by the hydraulic pump unit is provided and is drivingly connected to the rear axle (48) of the crane vehicle (10), and
between the rear axle (48) and the second hydraulic motor (56) a second transmission mechanism (54) is connected.

2. Crane vehicle as claimed in claim 1, **characterised in that** the drive unit (58) is a diesel engine.

3. Crane vehicle as claimed in claim 1 or 2, **characterised in that** the first transmission mechanism (50) and the second transmission mechanism (54) are each a power shift transmission.

4. Crane vehicle as claimed in any one of the preceding claims, **characterised in that** the first transmission mechanism (50) and the second transmission mechanism (54) are each a two-gear transmission.

5. Crane vehicle as claimed in any one of the preceding claims, **characterised in that** each of the hydraulic motors (52, 56) is flange-mounted on the respective transmission mechanism (50, 54) and each of the transmission mechanisms is flange-mounted on the respective driving axle (46, 48).

6. Crane vehicle as claimed in any one of the preceding claims, **characterised in that** each driving axle (46, 48) is allocated a middle differential lock.

7. Crane vehicle as claimed in any one of the preceding claims, **characterised in that** each driven wheel is allocated a transverse differential lock.

8. Crane vehicle as claimed in any one of the preceding claims, **characterised in that** the valve control means of each transmission mechanism (50, 54) is formed in such a way that in the event of a power supply failure the through drive of the associated hydraulic motor (52, 56) to the respective drive axle is severed.

9. Crane vehicle as claimed in any one of the preceding claims, **characterised in that** the control means (42) controls the travelling drive system in dependence upon the accelerator pedal position and the momentary travel speed.

## Revendications

1. Grue automobile (10) comportant un bras télescopique (12) et un système d'entraînement hydrostatique pour au moins deux essieux entraînés (46, 48, 49), et qui comprend :
- un groupe motopropulseur (58),
- une unité de pompes hydrauliques (60) entraînée par le groupe motopropulseur,
- un premier moteur hydraulique (52) qui est entraîné par l'unité de pompes hydrauliques (60) et qui est relié en entraînement à l'essieu avant (46) de la grue automobile (10),
- une première transmission à changement de vitesse entre l'essieu avant (46) et le premier moteur hydraulique (52),
- une commande (42) assurant le fonctionnement du système d'entraînement, **caractérisée en ce que**
- il est prévu un second moteur hydraulique (56) qui est entraîné par l'unité de pompes hydrauliques et qui est relié en entraînement à l'essieu arrière (48) de la grue automobile (10), et
- entre l'essieu arrière (48) et le second moteur hydraulique (56), est montée une deuxième transmission à changement de vitesse (54).

2. Grue automobile selon la revendication 1, **caractérisée en ce que** le groupe motopropulseur (58) est un moteur Diesel.

3. Grue automobile selon la revendication 1 ou 2, **caractérisée en ce que** la première et la seconde transmission (50, 54) sont toutes deux des transmissions à changement de vitesse conçues pour de fortes charges.

4. Grue automobile selon une des revendications précédentes, **caractérisée en ce que** la première et la seconde transmission (50; 54) sont toutes deux des transmissions à deux rapports.

5. Grue automobile selon une des revendications précédentes, **caractérisée en ce que** chacun des moteurs hydrauliques (52, 56) est monté par bride sur la transmission à changement de vitesse (50, 54) correspondante, cette transmission étant elle-même montée par bride sur l'essieu moteur (46, 48) correspondant.

6. Grue automobile selon une des revendications précédentes, **caractérisée en ce qu'**à chaque essieu moteur (46, 48) est associé un blocage central de différentiel.

7. Grue automobile selon une des revendications précédentes, **caractérisée en ce qu'**à chaque roue de commande est associé un blocage transversal de différentiel.

8. Grue automobile selon une des revendications précédentes, **caractérisée en ce que** la commande des soupapes de chaque transmission à changement de vitesse (50, 54) est constituée de manière qu'en cas de défaillance de l'alimentation en courant, l'entraînement du moteur hydraulique (52, 56) associé à l'essieu moteur correspondant est coupé.

9. Grue automobile selon une des revendications précédentes, **caractérisée en ce que** la commande (42) du système d'entraînement a lieu en fonction de la position de la pédale d'accélérateur et de la vitesse de déplacement instantanée.
